# EUROPÄISCHE PATENTSCHRIFT

(11) **EP 2 662 215 B1**
(45) Veröffentlichungstag und Bekanntmachung des Hinweises auf die Patenterteilung: **21.01.2015**
(21) Anmeldenummer: 13159639.7
(22) Anmeldetag: 15.03.2013
(51) Int. Cl.: B32B 37/00, B32B 41/00, B21B 38/00

(54) **Laminiergerät**
Laminating device
Appareil de laminage

(30) Priorität: 09.05.2012 DE 202012101706 U
(43) Veröffentlichungstag der Anmeldung: 13.11.2013
(73) Patentinhaber: Monolith GmbH Bürosysteme, 45127 Essen (DE)
(72) Erfinder: Loibl, Bernd, 79771 Klettgau (DE)
(74) Vertreter: Albrecht, Ralf

(56) Entgegenhaltungen:
- EP-A2- 1 188 576
- KR-A- 20080 070 204
- US-A1- 2002 074 090

## Beschreibung

Die Erfindung betrifft ein Laminiergerät zum Heißlaminieren einer Kombination aus Blattgut und Laminierfolie, mit einem Gehäuse, durch das ein Durchlaufkanal für den Durchlauf der Kombination geht und in dem eine dem Durchlaufkanal zugeordnete Laminiereinrichtung angeordnet ist, in der die Kombination unter Einwirkung von Druck und Hitze laminierbar ist und die eine Heizeinrichtung zum Aufheizen der Laminierfolie aufweist, welche mit einer Temperaturanzeigeeinrichtung versehen ist, die ein Anzeigeelement umfasst, welches eine von außen erkennbare Anzeige erzeugt, wenn in der Heizeinrichtung eine der Betriebsbereitschaft des Laminiergerätes entsprechende Bereitschaftstemperatur erreicht ist.

Zum Schutz von Blattgut, insbesondere von wertvollen Dokumenten, ist es bekannt, das Blattgut mit einer Laminierfolie zu verschweißen. Hierfür wird das Blattgut zwischen zwei eine Laminierfolie bildenden Folienblättern eingeschweißt. Dabei kann es sich um lose Folienblätter oder um Folienbahnen handeln, die mittels Schneideinrichtungen vereinzelt werden. Stattdessen können die beiden Folienblätter aber auch in Form einer Laminierfolientasche vorliegen, bei denen die beiden Folienblätter an zumindest einer Seitenkante miteinander verbunden sind. Solche Laminierfolien sind beispielsweise aus der DE 197 44 595 A1 und der DE 201 00 328 U1 bekannt. Die Folienblätter sind als Verbundfolien ausgebildet, bei denen eine durchsichtige, klare Folien aus zum Beispiel Polyethylen oder Polypropylen mit einer wärmeempfindlichen Klebstoffschicht versehen ist, welche beispielsweise aus EVA (Ethylen-Vinylazetat-Copolymer) besteht (vgl. DE 600 29 505 T2).

Das Laminieren von Blattgut mit Hilfe solcher Laminierfolien geschieht im nicht industriellen Bereich, d.h. im Büro und Privatbereich, mit Hilfe von in der Regel als Tischgeräte ausgebildeten Laminiergeräten. Solche Laminiergeräte sind beispielsweise aus der DE 20 2005 005 020 U1 und der EP 2 329 950 A1 bekannt. Sie haben im Wesentlichen den gleichen Aufbau, d.h. ein Gehäuse, in dem eine Laminiereinrichtung angeordnet ist. Zwischen einer Zuführöffnung auf einer Seite und einer Austrittsöffnung auf der anderen Seite des Gehäuses erstreckt sich durch das Gehäuse ein Durchlaufkanal, dem die Laminiereinrichtung im Inneren des Gehäuses zugeordnet ist. Letztere weist in der Regel mindestens ein Walzenpaar, teilweise auch mehrere Walzenpaare aus jeweils zwei übereinander angeordneten, einen Laminierspalt frei lassenden Laminierwalzen auf. Der Laminierspalt zwischen zwei gegenüberliegenden Laminierwalzen ist so eingestellt, dass die Kombination aus Blattgut und Laminierfolie in dem Laminierspalt einem erheblichen Druck ausgesetzt wird.

Bei Heißlaminiergeräten ist zumindest eine der Laminierwalzen, in der Regel beide, mit einer Heizeinrichtung versehen, so dass die Kombination aus Blattgut und Laminierfolie zusätzlich auch erhitzt wird. Dabei schmelzen die wärmeempfindlichen Klebstoffschichten auf und werden klebfähig, wodurch die Laminierfolie mit dem einzuschweißenden Blattgut verklebt.

Um ein sicheres Aufschmelzen der Klebstoffschichten und damit eine zuverlässige Laminierung des Blattgutes zu erreichen, muss die Heizeinrichtung der Laminiereinrichtung eine bestimmte Temperatur, nämlich die Bereitschaftstemperatur, erreicht haben. Nach Einschalten des kalten Laminiergerätes dauert dies eine Weile, während der das Laminiergerät zwecks Vermeidung von Fehllaminierungen noch nicht genutzt werden sollte. Um dem Benutzer anzuzeigen, dass das Laminiergerät betriebsbereit ist, also die Heizeinrichtung die Bereitschaftstemperatur erreicht hat, weisen solche Laminiergeräte Temperaturanzeigeeinrichtungen auf, die einen Sensor zur Erfassung der Temperatur der Heizeinrichtung sowie eine Anzeigeeinrichtung mit einem von außen erkennbaren Anzeigeelement aufweisen.

Die Temperaturanzeigeeinrichtung ist bei den bekannten Laminiergeräten als elektronische Einheit mit einem wärmeempfindlichen Sensor, einer Steuereinrichtung und einem elektrisch ansteuerbaren Leuchtmittel versehen, das an der Außenseite des Gehäuses angebracht ist. Das Leuchtmittel leuchtet auf (oder geht aus), sobald der Sensor feststellt, dass die Heizeinrichtung die Bereitschaftstemperatur erreicht hat. Dann kann das Laminiergerät in Benutzung genommen werden.

Temperaturanzeigeeinrichtungen der vorbeschriebenen Art sind in ihrem Aufbau und auch in der Montage aufwändig und zudem nicht störungssicher. Der Erfindung liegt folglich die Aufgabe zugrunde, ein Laminiergerät mit einer Temperaturanzeigeeinrichtung zu versehen, die wesentlich einfacher und kostengünstiger ausgebildet ist und eine hohe Zuverlässigkeit hat.

Diese Aufgabe wird erfindungsgemäß dadurch gelöst, dass das Anzeigeelement als zumindest ein reversibles thermochromes Element ausgebildet ist, das mit der Heizeinrichtung derart wirkungsmäßig gekoppelt ist, dass eine reversible Verfärbung des Elements in Abhängigkeit von der Temperatur der Heizeinrichtung eintritt. Grundgedanke der Erfindung ist es also, für das Anzeigeelement ein passives Element in Form eines reversiblen thermochromen Elementes zu verwenden. Solche thermochromen Elemente verfärben sich in Abhängigkeit von der auf sie einwirkenden Temperatur, ohne dass es weiterer wesentlicher Einrichtungen hierzu bedarf. Das thermochrome Element erfüllt dabei sowohl die Funktion eines Sensors als auch die eines Anzeigeelements selbst. Zu seiner Funktion bedarf es nicht aktiver Elemente wie Stromzufuhr etc. Deshalb ist ein Ausfall nicht zu befürchten. Wegen des einfachen Aufbaus der Temperaturanzeigeeinrichtung sind die Kosten für Herstellung und Montage gering. Der Nutzer des Laminiergerätes muss lediglich darauf achten, dass das thermochrome Element eine bestimmte Farbe erreicht hat, bevor er das Laminiergerät für einen Laminiervorgang in Benutzung nimmt.

Thermochrome Elemente sind an sich schon seit langem bekannt. Die mit Temperaturänderungen einhergehenden Farbveränderungen solcher Elemente beruht auf Änderungen der Molekül- oder Kristallstruktur. Bekannt ist es, hierfür anorganische Verbindungen wie Rutil und Zinkoxid zu verwenden. Es gibt aber auch organische Verbindungen. Beispiel hierfür sind der DE 10 2008 011 444 A1 und DE 103 39 442 A1 zu entnehmen. Das thermochrome Element kann insbesondere in Form eines Flächenelements ausgebildet sein, beispielsweise als Folie oder als außen auf einen Träger aufgebrachter Lack. Dabei kann das thermochrome Element die Eigenschaft haben, seine Farbe mit steigender Temperatur kontinuierlich zu ändern oder aber auch einen definierten Farbumschlag im Bereich der Betriebstemperatur zu erzeugen.

In Ausbildung der Erfindung ist vorgesehen, dass die Heizeinrichtung als zumindest eine Heizwalze ausgebildet ist, und zwar vorzugsweise als ein Paar bildende Heizwalzen, zwischen denen ein den Durchlaufkanal bildender Spalt freigelassen ist. Dies schließt nicht aus, dass statt einer Heizwalze auch gerätefeste Heizstäbe oder - platten verwendet werden, um die Kombination aus Laminierfolie und Blattgut zu erhitzen.

Die Anzeigeeinrichtung kann im Wärmestrahlungsbereich der Heizeinrichtung angeordnet sein, so dass sie von der von der Heizeinrichtung ausgehenden Wärmestrahlung beaufschlagt wird und sich dabei so erhitzt, dass das thermochrome Element sich mit der Temperatur in Richtung auf eine Endfarbe verfärbt. Das thermochrome Element kann im Wesentlichen oberhalb der Heizeinrichtung an der Oberseite des Gehäuses angeordnet sein, so dass der Abstand zwischen Heizeinrichtung und thermochromen Element kurz ist und die Farbveränderung vom Benutzer des Laminiergerätes gut beobachtet werden kann.

In weiterer Ausgestaltung der Erfindung ist vorgesehen, dass dem thermochromen Element benachbart zumindest ein Farbvergleichsfeld angeordnet ist, dessen Farbe derjenigen Farbe entspricht, die das thermochrome Element mit Erreichen der Bereitschaftstemperatur des Laminiergerätes einnimmt. Mit Hilfe eines solchen Farbvergleichsfelds hat es der Benutzer einfacher festzustellen, ob das thermochrome Element die der Betriebsbereitschaft bzw. der Bereitschaftstemperatur entsprechende Farbe erreicht hat. Dies wird für das Auge des Benutzers besonders einfach feststellbar, wenn das Farbvergleichsfeld unmittelbar an das thermochrome Element angrenzt und zwar zweckmäßigerweise so, dass Farbvergleichsfeld und thermochromes Element nicht mehr unterscheidbar sind, wenn das thermochrome Element die der Bereitschaftstemperatur entsprechende Farbe erreicht hat.

Die Anordnung des Farbvergleichsfelds kann auf verschiedene Weise erfolgen. Beispielsweise kann das Farbvergleichsfeld das thermochrome Element umgeben. Wenn das thermochrome Element als Flächenelement ausgebildet ist, kann das Farbvergleichsfeld wenigstens teilweise innerhalb der Umrandung des thermochromen Elements angeordnet sein. Beides lässt sich auch miteinander kombinieren. Ferner besteht die Möglichkeit, dass das thermochrome Element unterhalb des zumindest einen Farbvergleichsfeldes angeordnet ist, welches mit wenigstens einer Durchbrechung zur Sichtbarmachung des thermochromen Elements versehen ist. Auch insoweit besteht die Kombinationsmöglichkeit mit anders angeordneten Farbvergleichsfeldern.

Nach einem weiteren Merkmal der Erfindung ist vorgesehen, dass das thermochrome Element an einem metallischen Wärmeleitelement anliegt, das in den Wärmestrahlungsbereich der Heizeinrichtung hineinreicht. Das verwendete Metall sollte hoch wärmeleitfähig sein, beispielsweise aus Kupfer oder einem mit ähnlicher Wärmeleitfähigkeit ausgestattetem Metall. Mit Hilfe des Wärmeleitelements kann der Abstand zwischen Heizeinrichtung und thermochromem Element teilweise überbrückt und damit die Wärmeeinwirkung auf das thermochrome Element intensiviert werden. Dabei kann das Wärmeleitelement auch derart ausgebildet sein, dass es auf das thermochrome Element einen Wärmestrahlungsschatten wirft, so dass das Element nur von Wärme beaufschlagt wird, die es über das Wärmeleitelement erreicht. Vorzugsweise sollte das thermochrome Element wenigstens im Wesentlichen vollständig an dem Wärmeleitelement anliegen, damit es über die Fläche eine gleichmäßige Farbverteilung hat.

Das Wärmeleitelement kann beidseitig des thermochromen Elements Wärmeleitabschnitte aufweisen, die sich in Richtung auf die Heizeinrichtung erstrecken. Zweckmäßigerweise sollten die Wärmeleitabschnitte an ihren der Heizeinrichtung benachbarten Enden über einen Verbindungsabschnitt miteinander verbunden sein.

Das thermochrome Element kann in einer Anzeigehalterung angeordnet sein, welche in das Gehäuse eingesetzt, vorzugsweise eingeklippt ist. Dies erleichtert die Montage der Anzeigeeinrichtung und damit des thermochromen Elements.

Im Übrigen liegt es im Rahmen der Erfindung, auch mehrere thermochrome Elemente und/oder Wärmeleitelemente vorzusehen und/oder die thermochromen Elemente mit mehreren Farbvergleichsfeldern zu kombinieren.

In der Zeichnung ist die Erfindung anhand eines Ausführungsbeispiels näher veranschaulicht. Es zeigen:
- Figur 1: einen Vertikalschnitt durch das erfindungsgemäße Laminiergerät;
- Figur 2: eine Draufsicht auf das Laminiergerät gemäß Figur 1;
- Figur 3: die Temperaturanzeigeeinrichtung des Laminiergeräts gemäß den Figuren 1 und 2;
- Figur 4: die Temperaturanzeigeeinrichtung gemäß Figur 3 vor Einsetzen des thermochromen Flächenelements und ohne Wärmeleitelement;
- Figur 5: das Wärmeleitelement für die Temperaturanzeigeeinrichtung gemäß Figur 3.

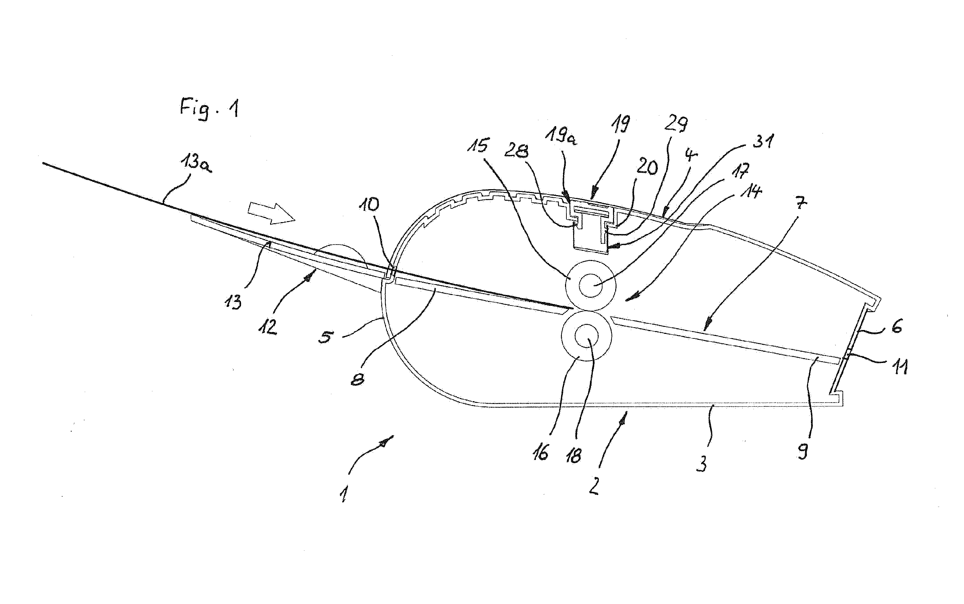

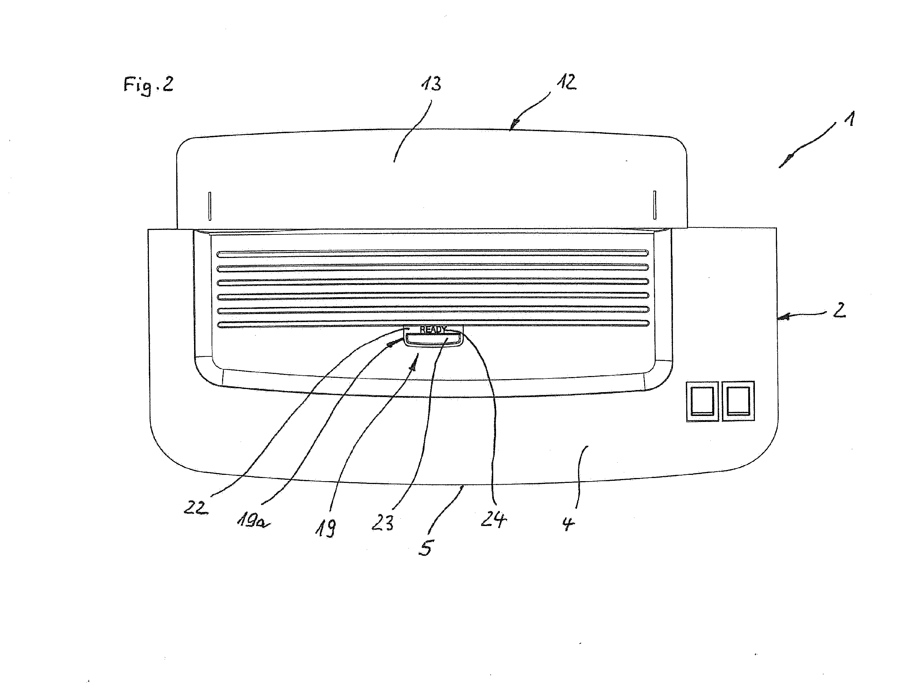

Das in den Figuren 1 und 2 dargestellte Laminiergerät 1 hat ein Gehäuse 2 mit einem ebenen Gehäuseboden 3, einer Oberwandung 4 sowie beide verbindenden Front- und Rückwandungen 5, 6, wobei die Frontwandung 5 den Gehäuseboden 3 und die Oberwandung 4 bogenförmig verbindet. Von der Frontwandung 5 zur Rückwandung 6 erstreckt sich ein leicht abwärts geneigter Durchlaufkanal 7, dessen Unterseite von gerätefesten Auflageplatten 8, 9 gebildet wird. Der Durchlaufkanal 7 wird frontseitig durch eine Zuführöffnung 10 in der Frontwandung 5 und rückseitig durch eine Austrittsöffnung 11 in der Rückwandung 6 begrenzt.

An der Frontwandung 5 angebracht ist eine Blattauflage 12, deren Oberseite 13 sich bündig an die Unterkante der Zuführöffnung 10 und an die Auflageplatte 8 anschließt. In Figur 1 trägt die Blattauflage auf der Oberseite 13 eine Kombination 13a aus Laminierfolie und Blattgut, deren Vorderkante etwa auf Höhe der Vorderkante der Auflageplatte 8 liegt.

Etwa in der Mitte des Durchlaufkanals 7 ist zwischen den einander zugewandten Endkanten der Auflageplatten 8, 9 eine Laminiereinrichtung 14 angeordnet. Von dieser Laminiereinrichtung 14 sind hier zwei übereinander und mit ihren Drehachsen parallel zueinander angeordnete, zylindrische Laminierwalzen 15, 16 zu sehen. Die Laminierwalzen 15, 16 erstrecken sich über die gesamte Breite des Durchlaufkanals 7 und bilden zwischen sich einen wegen seiner geringen Erstreckung nicht sichtbaren Laminierspalt aus. Die Laminierwalzen 15, 16 weisen sich koaxial erstreckende Heizstäbe 17, 18 auf, die als elektrische Wiederstandsheizstäbe ausgebildet sind. Sie sind so ausgelegt und erforderlichenfalls geregelt, dass sie bei Betriebsbereitschaft des Laminiergerätes 1 eine bestimmte, definierte Temperatur haben. Diese kann zwischen 80°C und 140°C liegen. Zu der Laminiereinrichtung 14 gehört ein elektromotorischer, hier nicht näher dargestellter Antrieb, der die beiden Laminierwalzen 15, 16 synchron antreibt, und zwar die obere Laminierwalze 15 entgegen dem Uhrzeigersinn und die untere Laminierwalze 16 im Uhrzeigersinn. Ihre Umfangsgeschwindigkeiten sind identisch.

In die Oberwandung 4 ist oberhalb der Laminierwalzen 15, 16 eine Temperaturanzeigeeinrichtung 19 mit einem als Kunststoffformteil ausgebildeten Anzeigekörper 19a eingelassen. Hierzu ist in der Oberwandung 4 eine Vertiefung 20 eingeformt, die im Vertiefungsboden einen Schlitz freilässt. In diese Vertiefung 20 ist die Temperaturanzeigeeinrichtung 19 derart eingesetzt, dass ihre Oberseite bündig mit der der Oberwandung 4 abschließt.

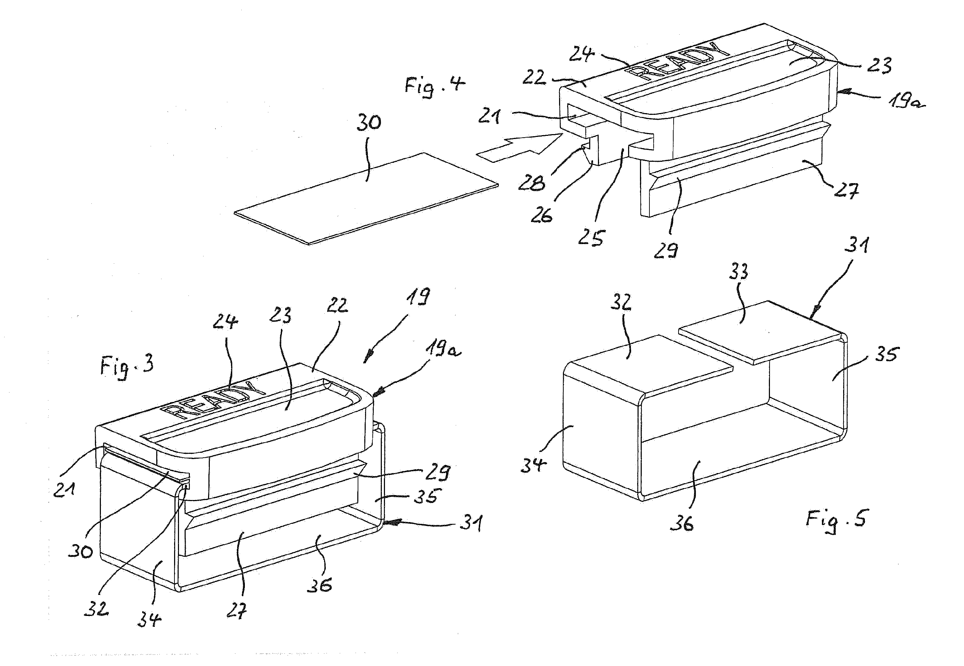

Wie insbesondere aus den Figuren 3 und 4 zu entnehmen ist, hat der Anzeigekörper 19a einen sich im Wesentlichen horizontal erstreckenden Schlitz 21. Der Schlitz 21 wird obenseitig begrenzt durch eine Gehäusewandung 22, welche ein durchsichtiges Fenster 23 sowie daneben Durchbrechungen in Form eines Schriftzuges des Wortes "READY" 24 aufweist. Der Schlitz 21 hat untenseitig eine durchgehende Längsöffnung 25, von deren Begrenzungskanten sich nach unten gerichtete Haltestege 26, 27 erstrecken. Die Haltestege 26, 27 sind an den einander abgewandten Seiten mit Rastvorsprüngen 28, 29 versehen, die im eingebauten Zustand (vgl. Figur 1) unter die Unterseiten der Vertiefung 20 fassen. Auf diese Weise kann die Temperaturanzeigeeinrichtung 19 von oben in die Vertiefung 20 eingesetzt und mit ihr verrastet werden.

Zur Temperaturanzeigeeinrichtung 19 gehört als Anzeigeelement ein thermochromes Flächenelement 30 rechteckigen Zuschnitts, das als Folie ausgebildet ist und reversible thermochrome Eigenschaften hat. Wie in Figur 4 angezeigt, wird das thermochrome Flächenelement 30 vor Montage der Temperaturanzeigeeinrichtung 19 in den Schlitz 21 eingeschoben, bis es die in Figur 3 dargestellte Stellung hat. In dieser Stellung erstreckt sich das thermochrome Flächenelement 30 sowohl über das Fenster 23 als auch den Schriftzug "READY" 24. Das thermochrome Flächenelement 30 hat eine solche Breite, dass es innerhalb des Schlitzes 21 gehalten wird.

Zu der Temperaturanzeigeeinrichtung 19 gehört auch ein Wärmeleitelement 31, das - wie insbesondere Figur 5 zeigt - klammerartig ausgebildet ist und zur Erzielung einer hohen Wärmeleitfähigkeit aus Kupfer oder einer Kupferlegierung besteht. Das Wärmeleitelement 31 hat zwei Auflageschenkel 32, 33, die in moniertem Zustand (vgl. Figur 3) von den Öffnungsseiten des Schlitzes 21 in diesen hinein ragen und im Wesentlichen die Breite des thermochromen Flächenelements 30 haben. Sie haben an den einander zugewandten Kanten nur einen geringen Abstand. Auf den Auflageschenkeln 32, 33 liegt das thermochrome Flächenelement 30 unmittelbar auf (vgl. Figur 3), sodass zu der gesamten Fläche Wärmeleitkontakt besteht.

Von den einander abgewandten Kanten der Auflageschenkel 32, 33 gehen senkrecht dazu Wärmeleitabschnitte 34, 35 ab. Wie aus Figur 1 zu ersehen ist, reichen die Wärmeleitabschnitte 34, 35 bis nah an die obere Laminierwalze 15 heran. Dort sind die Wärmeleitabschnitte 34, 35 durch einen Verbindungsabschnitt 36 verbunden, der sich parallel zu den Auflageschenkeln 32, 33 erstreckt.

Das thermochrome Flächenelement 30 hat bei kaltem Laminiergerät 1 eine bestimmte Farbe, die dem Benutzer des Laminiergerätes 1 die Information gibt, dass sich das Gerät nicht auf Betriebstemperatur befindet und somit nicht betriebsbereit ist. Die Farbe des thermochromen Flächenelements 30 kann der Benutzer über das Fenster 23 und den Schriftzug "READY" 24 beobachten. Wird das Laminiergerät 1 eingeschaltet, werden die Heizstäbe 17, 18 mit elektrischem Strom beaufschlagt, sodass sich die Laminierwalzen 15, 16 erwärmen. Die insbesondere von der oberen Laminierwalze 15 ausgehende Wärmestrahlung wird von dem Verbindungsabschnitt 36 des Wärmeleitelementes 31 aufgenommen und führt zu dessen entsprechender Erwärmung. Infolge Wärmeleitungen erhitzen sich auch die Wärmeleitabschnitte 34, 35 und letztlich die Auflageschenkel 32, 33. Deren Wärme wird übertragen auf das thermochrome Flächenelement 30. Aufgrund seiner thermochromen Eigenschaft verändert es seine Farbe in Abhängigkeit von der Temperatur, was der Benutzer des Laminiergerätes 1 über das Fenster 23 und den Schriftzug 24 beobachten kann. Die Verfärbung kann auch in einer Intensitätsänderung einer bestimmten Farbe bestehen.

Bei Erreichen der vorgesehenen Betriebstemperatur der Laminierwalzen 15, 16 nimmt das thermochrome Flächenelement 30 eine vorgegebene bestimmte Einfärbung ein, die dem Benutzer anzeigt, dass er nunmehr das Laminiergerät 1 für einen Laminiervorgang in Betrieb nehmen kann. Um dem Benutzer eine Hilfe für die Feststellung derjenigen Farbe zu bieten, bei der das thermochrome Flächenelement 30 die die Betriebsbereitschaft anzeigende Farbe einnimmt, ist die Oberseite der Gehäusewandung 22 unter Ausbildung eines Farbvergleichsfeldes mit eben dieser Farbe versehen oder derart eingefärbt. Bei Übereinstimmung dieser Farbe mit der Farbe des thermochromen Flächenelements 30 steht dann für den Benutzer fest, dass er einen Laminiervorgang starten kann. Hierzu legt er die Kombination 13a, wie in Figur 1 gezeigt, auf die Blattauflage 12 und schiebt sie soweit in den Durchlaufkanal 7 ein, bis sie von den dann angetriebenen Laminierwalzen 14, 15 erfasst wird. Die Kombination 13 wird dann durch den Laminierspalt transpariert, wo sie über ihre gesamte Fläche Druck und Hitze ausgesetzt wird. Danach kann die laminierte Kombination 13a über die Austrittsöffnung 11 entnommen werden.

## Patentansprüche

1. Laminiergerät (1) zum Heißlaminieren einer Kombination (13a) aus Blattgut und Laminierfolie, mit einem Gehäuse (2), durch das ein Durchlaufkanal (7) für den Durchlauf der Kombination (13a) geht und in dem eine dem Durchlaufkanal (7) zugeordnete Laminiereinrichtung (14) angeordnet ist, in der die Kombination (13a) unter Einwirkung von Druck und Hitze laminierbar ist und die eine Heizeinrichtung (17, 18) zum Aufheizen der Laminierfolie aufweist, welche mit einer Temperaturanzeigeeinrichtung (19) versehen ist, die ein Anzeigeelement (30) umfasst, welches eine von außen erkennbares Anzeige erzeugt, wenn in der Heizeinrichtung (17, 18) eine der Betriebsbereitschaft des Laminiergerätes (1) entsprechende Bereitschaftstemperatur erreicht ist, **dadurch gekennzeichnet, dass** das Anzeigeelement als zumindest ein reversibles thermochromes Element (30) ausgebildet ist, das mit der Heizeinrichtung (17, 18) derart wirkungsmäßig gekoppelt ist, dass eine reversible Verfärbung des thermochromen Elements (30) in Abhängigkeit von der Temperatur der Heizeinrichtung (17, 18) eintritt.

2. Laminiergerät nach Anspruch 1, **dadurch gekennzeichnet, dass** die Heizeinrichtung als zumindest eine Heizwalze (17, 18) ausgebildet ist.

3. Laminiergerät nach Anspruch 1 oder 2, **dadurch gekennzeichnet, dass** die Temperaturanzeigeeinrichtung 19 im Wärmestrahlungsbereich der Heizeinrichtung (17, 18) angeordnet ist.

4. Laminiergerät nach einem der Ansprüche 1 oder 2, **dadurch gekennzeichnet, dass** das thermochrome Element (30) im Wesentlichen oberhalb der Heizeinrichtung (17, 18) an der Oberseite des Gehäuses (2) angeordnet ist.

5. Laminiergerät nach einem der Ansprüche 1 bis 4, **dadurch gekennzeichnet, dass** dem thermochromen Element (30) benachbart zumindest ein Farbvergleichsfeld angeordnet ist, dessen Farbe derjenigen Farbe entspricht, die das thermochrome Element (30) mit Erreichen der Bereitschaftstemperatur des Laminiergerätes (1) einnimmt.

6. Laminiergerät nach Anspruch 5, **dadurch gekennzeichnet, dass** das zumindest eine Farbvergleichsfeld das thermochrome Element (30) umgibt.

7. Laminiergerät nach Anspruch 5 oder 6, **dadurch gekennzeichnet, dass** das thermochrome Element (30) als Flächenelement ausgebildet ist und das zumindest eine Farbvergleichsfeld wenigstens teilweise innerhalb der Umrandung des thermochromen Elements (30) angeordnet ist.

8. Laminiergerät nach einem der Ansprüche 5 bis 7, **dadurch gekennzeichnet, dass** das thermochrome Element (30) unterhalb des zumindest einen Farbvergleichsfeldes angeordnet ist, welches mit wenigstens einer Durchbrechung (24) zur Sichtbarmachung des thermochromen Elements (30) versehen ist.

9. Laminiergerät nach einem der Ansprüche 1 bis 8, **dadurch gekennzeichnet, dass** das thermochrome Element (30) an einem metallischen Wärmeleitelement (31) anliegt, das in den Wärmestrahlungsbereich der Heizeinrichtung (17, 18) hineinreicht.

10. Laminiergerät nach Anspruch 9, **dadurch gekennzeichnet, dass** das Wärmeleitelement (31) derart ausgebildet ist, dass es auf das thermochrome Element (30) einen Wärmestrahlungsschatten wirft.

11. Laminiergerät nach Anspruch 9 oder 10, **dadurch gekennzeichnet, dass** das thermochrome Element (30) wenigstens im Wesentlichen vollständig an dem Wärmeleitelement (31) anliegt.

12. Laminiergerät nach Anspruch 11, **dadurch gekennzeichnet, dass** das Wärmeleitelement (31) beidseitig des thermochromen Elements (30) Wärmeleitabschnitte (34, 35) aufweist, die sich in Richtung auf die Heizeinrichtung erstrecken.

13. Laminiergerät nach Anspruch 12, **dadurch gekennzeichnet, dass** die Wärmeleitabschnitte (34, 35) an ihren der Heizeinrichtung benachbarten Enden über einen Verbindungsabschnitt (36) miteinander verbunden sind.

14. Laminiergerät nach einem der Ansprüche 1 bis 13, **dadurch gekennzeichnet, dass** das thermochrome Element (30) in einer Anzeigehalterung (19a) angeordnet ist, welche in das Gehäuse eingesetzt, vorzugsweise eingeklippt ist.

## Claims

1. Laminating apparatus (1) for hot laminating a combination (13a) of sheet material and laminating foil, the laminating apparatus (1) comprises a housing (2), through which a pass-through channel (7) for passing the combination (13a) extends and in which a laminating device (14) is arranged associated with the pass-through channel (7), the combination (13a) can be laminated in the laminating device (14) under pressure and heat, wherein the laminating device (14) includes a heating device (17, 18) for heating the laminating foil, the heating device (17, 18) including a temperature display device (19) which includes a display element (30) which generates an externally detectable display when the heating device (17, 18) has reached a ready temperature that corresponds to an operational readiness of the laminating apparatus (1), **characterized in that** the display element is configured as at least one reversible thermo-chromic element (30) which is operatively coupled with the heating device (17, 18) so that a reversible discoloration of the at least thermo-chromic element (30) occurs as a function of the temperature of the heating device (17, 18).

2. Laminating apparatus according to claim 1, **characterized in that** the heating device is configured as at least one heating roller (17, 18).

3. Laminating apparatus according to claim 1 or 2, **characterized in that** the temperature display device (19) is arranged in a heat radiation portion of the heating device (17, 18).

4. Laminating apparatus according to one of the claims 1 or 2, **characterized in that** the thermo-chromic element (30) is arranged substantially above the heating device (17, 18) at a top side of the housing (2).

5. Laminating apparatus according to one of the claims 1 through 4, **characterized in that** at least one color comparison field is arranged adjacent to the thermo-chromic element (30), wherein the color of the at least one color comparison field corresponds to a color which is assumed by the thermo-chromic element (30) when a ready temperature of the laminating apparatus (1) is reached.

6. Laminating apparatus according to claim 5, **characterized in that** the at least one color comparison field envelops the thermo-chromic element (30).

7. Laminating apparatus according to claim 5 or 6, **characterized in that** the thermo-chromic element (30) is a flat element and the at least one color comparison field is at least partially arranged within boundaries of the thermo-chromic element (30).

8. Laminating apparatus according to one of the claim 5 through 7, **characterized in that** the thermo-chromic element (30) is arranged below the at least one color comparison field which is provided with at least one pass-through (24) for rendering the thermo-chromic element (30) visible.

9. Laminating apparatus according to one of the claims 1 through 8, **characterized in that** the thermo-chromic element (30) contacts a metal heat conducting element (31) which reaches into a heat radiation portion of the heating device (17, 18).

10. Laminating apparatus according to claim 9, **characterized in that** the heat conducting element (31) is configured so that it puts a heat radiation shade onto the thermo-chromic element (30).

11. Laminating apparatus according to claim 9 or 10, **characterized in that** the thermo-chromic element (30) contacts the heat conducting element (31) at least substantially in its entirety.

12. Laminating apparatus according to claim 11, **characterized in that** the heat conducting element (31) includes heat conducting section (34, 35) on both sides of the thermo-chromic element (30), wherein the heat conducting sections (34, 35) extend in a direction towards the heating device.

13. Laminating apparatus according to claim 12, **characterized in that** the heat conducting sections (34, 35) are connected with one another at ends adjacent to the heating device through a connecting section (36).

14. Laminating apparatus according to one of the claims 1 through 13, **characterized in that** the thermo-chromic element (30) is arranged in a display support (19a) which is inserted into the housing, preferably snap locked.

## Revendications

1. Plastifieuse (1) pour la plastification à chaud d'une combinaison (13a) d'une feuille et d'une pochette de plastification, avec un boîtier (2), à travers lequel passe un canal (7) que traverse la combinaison (13a), dans lequel est disposé un dispositif de plastification (14) assigné au canal (7), dans laquelle la combinaison (13a) est plastifiée sous la pression et la chaleur et est disposé le dispositif chauffant (17, 18) qui sert à réchauffer la pochette de laminage et qui est pourvu d'un indicateur de température (19) comprenant un élément d'affichage (30) sur lequel on peut lire de l'extérieur un signal indiquant que le dispositif chauffant (17, 18) a atteint la température d'opération de la plastifieuse (1), **caractérisée en ce que** l'élément d'affichage prend au moins la forme d'un élément thermochrome réversible (30) couplé fonctionnellement au dispositif chauffant (17, 18) de façon à engendrer une décoloration réversible de l'élément thermochrome (30) selon la température du dispositif chauffant (17, 18).

2. Plastifieuse selon la revendication 1, **caractérisée en ce que** le dispositif chauffant prend au moins la forme d'un rouleau chauffant (17, 18).

3. Plastifieuse selon les revendications 1 ou 2, **caractérisée en ce que** l'indicateur de température (19) est disposé dans la zone de rayonnement thermique du dispositif chauffant (17, 18).

4. Plastifieuse selon l'une des revendications 1 ou 2, **caractérisée en ce que** élément thermochrome (30) est essentiellement disposé au-dessus du dispositif chauffant (17, 18) sur la face supérieure du boîtier (2).

5. Plastifieuse selon l'une des revendications 1 à 4, **caractérisée en ce que** l'élément thermochrome (30) est disposé à côté d'au moins une zone de comparaison de couleurs dont la couleur correspond à celle que prend l'élément thermochrome (30) après qu'il ait atteint la température d'opération de la plastifieuse (1).

6. Plastifieuse selon la revendication 5, **caractérisée en ce que** ladite zone de comparaison de couleurs entoure l'élément thermochrome (30).

7. Plastifieuse selon les revendications 5 ou 6, **caractérisée en ce que** l'élément thermochrome (30) est formé comme un élément de surface et que ladite zone de comparaison de couleurs est disposée au moins partiellement à l'intérieur de la bordure de limitation de l'élément thermochrome (30).

8. Plastifieuse selon l'une des revendications 5 à 7, **caractérisée en ce que** l'élément thermochrome (30) est disposé sous ladite zone de comparaison de couleurs qui est pourvue d'au moins une ouverture (24) rendant visible l'élément thermochrome (30).

9. Plastifieuse selon l'une des revendications 1 à 8, **caractérisée en ce que** élément thermochrome (30) touche à un élément métallique thermoconducteur (31) qui pénètre dans la zone de rayonnement thermique du dispositif chauffant (17, 18).

10. Plastifieuse selon la revendication 9, **caractérisée en ce que** l'élément métallique thermoconducteur (31) est formé de façon à jeter une ombre de rayonnement thermique sur l'élément thermochrome (30).

11. Plastifieuse selon les revendications 9 ou 10, **caractérisée en ce que** l'élément thermochrome (30) est au moins essentiellement complètement adjacent à l'élément thermoconducteur (31).

12. Plastifieuse selon la revendication 11, **caractérisée en ce que** l'élément thermoconducteur (31) présente des deux côtés de l'élément thermochrome (30) des sections thermoconductrices (34, 35) qui s'étendent en direction du dispositif chauffant.

13. Plastifieuse selon la revendication 12, **caractérisée en ce que** les sections thermoconductrices (34, 35) sont reliées entre elles par leurs extrémités adjacentes au dispositif chauffant au moyen d'une section de liaison (36).

14. Plastifieuse selon l'une des revendications 1 à 13, **caractérisée en ce que** l'élément thermochrome (30) est disposé dans un support d'indicateur (19a) encastré, ou idéalement encliqueté, dans le boîtier.
